# EUROPÄISCHE PATENTANMELDUNG

(11) **EP 3 040 239 A1**
(43) Veröffentlichungstag der Anmeldung: **06.07.2016**
(21) Anmeldenummer: 15466020.3
(22) Anmeldetag: 21.12.2015
(51) Int. Cl.: B60Q 1/04, F16B 5/02, F16B 37/04, B60Q 1/26, F16C 11/06, F16C 11/12

(54) **VORRICHTUNG ZUR BEFESTIGUNG EINER LEUCHTEINHEIT EINES KRAFTFAHRZEUGES**

(30) Priorität: 30.12.2014 CZ 20140965
(71) Anmelder: Skoda Auto a.s., 29301 Mladá Boleslav (CZ)
(72) Erfinder: Lubos, Fiser, CZ-29442 Lustenice (CZ)

(57) **Zusammenfassung**

Vorrichtung zur Befestigung einer Leuchteinheit eines Kraftfahrzeuges bestehend aus einem an einer Fahrzeugkarosserie (1) angeordneten Kugelbolzen (4) mit Kugelkopf (5), einer an der Leuchteinheit (3) angeordneten Halterung (9), wobei die Halterung (9) aus einem Oberteil (10) und einem Unterteil (11) mit gegenüberliegend angeordneten Flächen (12, 12') mit Riffelung (14, 14') besteht, und ferner bestehend aus einem in Nuten (13, 13') angeordneten Arretierungselement (15), das zwei gegenüberliegende vertikale Einlaufvorsprünge (17) mit Einlaufvertiefungen (18) und einer Kugelvertiefung (19) und zwei horizontal angeordnete kürzere Vorsprünge (20) mit Außenflächen (22) aufweist, welche den Flächen (12, 12') des Oberteils (10) und des Unterteils (11) der Halterung (9) gegenüberliegen, wobei das Arretierungselement (15) aus einer Arbeitsstellung, in der die Leuchteinheit (3) in der Querrichtung gegenüber der Fahrtrichtung des Fahrzeuges ausgerichtet werden kann, in eine arretierte Stellung verstellbar ist, in der die Leuchteinheit in der Querrichtung (3) fest fixiert ist.

## Beschreibung

### Technisches Gebiet

Die Erfindung betrifft eine Vorrichtung zur Befestigung einer Leuchteinheit eines Kraftfahrzeuges, insbesondere einer Rückleuchteneinheit, die quer zur Fahrtrichtung des Fahrzeuges verstellbar ist.

### Bisheriger Stand der Technik

Derzeit werden zur Befestigung von Leuchteinheiten der Kraftfahrzeuge an der Karosserie größtenteils die Kugelbolzen verwendet. Diese Bolzen weisen einen Abschnitt mit Gewinde, mit dessen Hilfe sie zur Karosserie befestigt werden, sowie einen zweiten Abschnitt mit einem Kugelbolzenkopf auf. Die hintere Wand der Leuchteinheit weist federnde Klemmmittel auf, mithilfe derer die Leuchteinheiten auf die Kugelbolzenköpfe aufgesteckt werden. Der Nachteil solcher Befestigung liegt in der fehlenden Möglichkeit eventuelle Ungenauigkeiten bei der Fugeneinstellung zwischen der Leuchteinheit und der Karosserie in der Querrichtung auszugleichen.

In dem Patentdokument DAS 1755157 ist eine Lösung beschrieben, wo der Fahrzeugscheinwerfer mittels Federklemmen in Rastaufnahmeelemente mit Nuten eingerastet ist, welche einen Toleranzausgleich sowohl horizontal, wie auch vertikal ermöglichen. Der Nachteil dieser Anordnung liegt in der relativ hohen Kompliziertheit und dadurch auch dem Finanzaufwand.

### Darstellung der Erfindung

Die Aufgabe wird durch eine Vorrichtung zur Befestigung einer Leuchteinheit eines Kraftfahrzeuges gelöst, die aus einem an der Fahrzeugkarosserie angeordneten Kugelbolzen, einer an der Leuchteinheit angeordneter Halterung, welche einen Ober- und einen Unterteil mit gegenüberliegend angeordneten Flächen mit einer Nut aufweist, und ferner aus einem in den Nuten angeordneten Arretierungselement mit zwei gegenüberliegenden vertikalen Einlaufvorsprüngen mit einer Einlaufvertiefung sowie einer Kugelvertiefung und aus zwei horizontal angeordneten kürzeren Vorsprüngen mit gegenüberliegend zu den Halterungsflächen angeordneten Außenflächen besteht.

Die Darstellung der Erfindung liegt darin, dass das Arretierungselement aus einer Arbeitsstellung, in der die Leuchteinheit in der Querrichtung zur Fahrtrichtung des Fahrzeuges verstellbar ist, in eine arretierte Stellung, in der die Leuchteinheit in der Querrichtung fest fixiert ist, verstellbar ist.

In der Arbeitsstellung ist der Kugelbolzenkopf zwischen den Einlaufvertiefungen der Einlaufvorsprünge angeordnet, wenn die Flächen des Ober- sowie Unterteils und die gegenüberliegenden Außenflächen der kürzeren Vorsprünge nicht anliegen, wobei in der arretierten Stellung der Kugelbolzenkopf zwischen den Kugelvertiefungen der Einlaufvorsprünge und der kürzeren Vorsprünge angeordnet ist und wenigstens eine Fläche des Ober- bzw. Unterteils an die entsprechende gegenüberliegende Außenfläche des kürzeren Vorsprungs anliegt.

Die Verbindung ist durch eine Riffelung sichergestellt, die an mindestens einer Fläche des Ober- bzw. Unterteils ausgeführt ist, welche der gegenüberliegenden Außenfläche des kürzeren Vorsprungs entspricht.

### Übersicht der Figuren der Zeichnungen

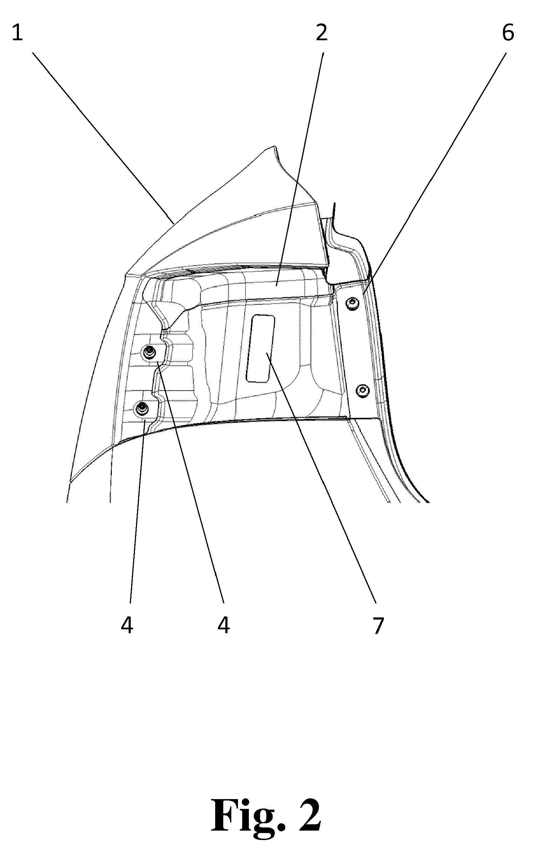

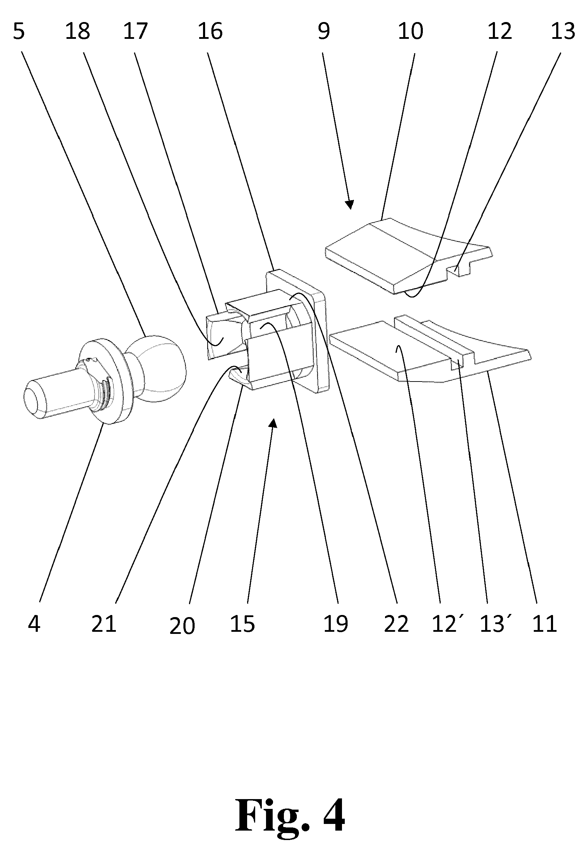

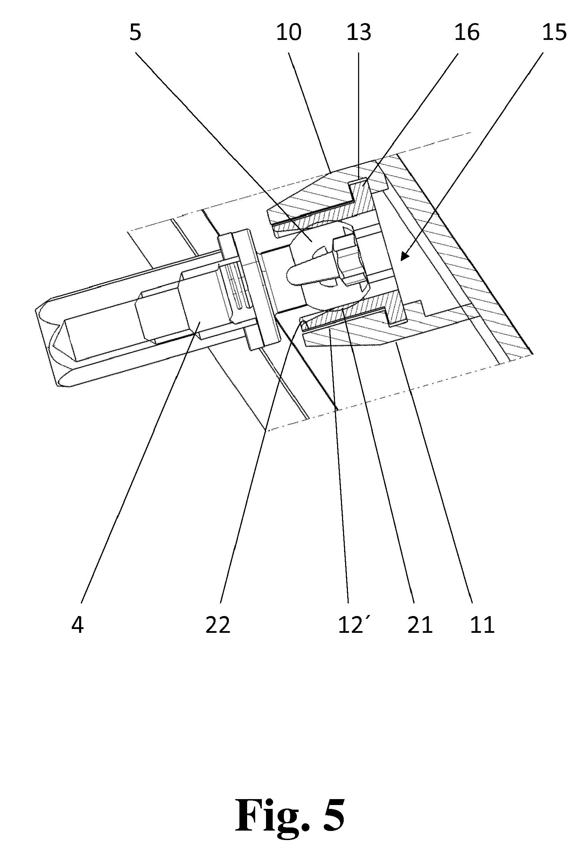

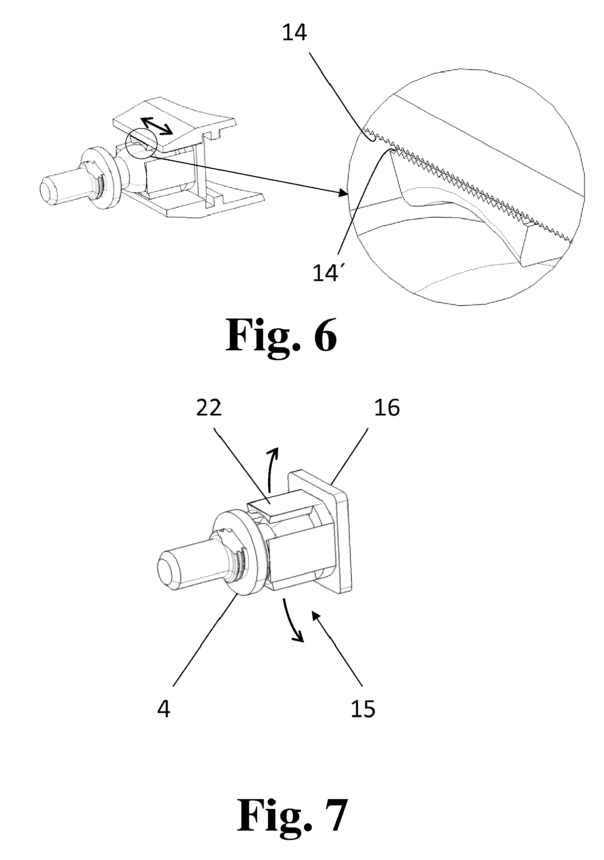

Die Erfindung wird anhand der Ausführungsbeispiele gemäß den beigefügten Zeichnungen näher erläutert, in denen zeigen die Fig. 1 die Ansicht des Abschnitts des Heckbereiches der Karosserie mit eingebauter Leuchteinheit, die Fig. 2 den Abschnitt des Heckbereiches der Karosserie ohne Leuchteinheit, die Fig. 3 den Grundriss der Leuchteinheit im Schnitt, die Fig. 4 eine perspektivische Ansicht der einzelnen Teile der Befestigung der Leuchteinheit, die Fig. 5 die Befestigungsteile der Leuchteinheit mit Arretierungselement in der arretierten Stellung in einer Schnittdarstellung, die Fig. 6 eine perspektivische Ansicht des Befestigungselementes in der Arbeitsstellung mit einem Detail der Flächen mit Nuten und die Fig. 7 eine perspektivische Ansicht des Arretierungselementes in der arretierten Stellung.

### Ausführungsbeispiel der Erfindung

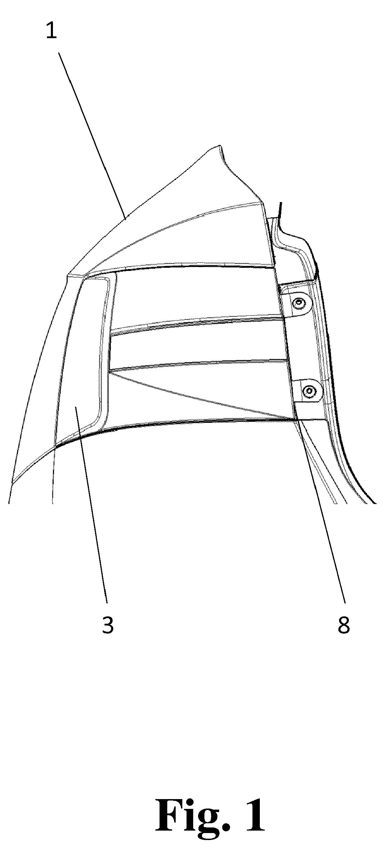

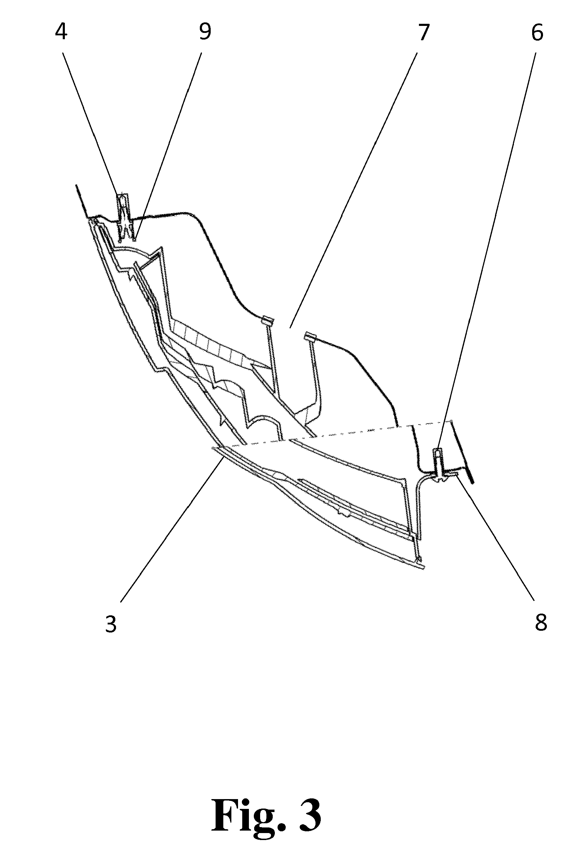

Die Fig. 1 zeigt einen Abschnitt des Heckbereiches der Karosserie 1 eines Kraftfahrzeuges mit einer Formverprägung 2, die für den Einbau einer Leuchteinheit 3 ausgestaltet ist. An der Außenseite der Formverprägung 3 befinden sich Kugelbolzen 4 mit einem Kopf 5, an der Innenseite befinden sich Befestigungslöcher 6 und in der Mitte ist eine Kabelstrangöffnung 7 für die Kabelstrangführung (nicht dargestellt). Die Leuchteinheit 3, die in der Formverprägung 2 der Karosserie 1 zu befestigen ist, weist an ihrer Hinterwand Befestigungsbügel 8 und weiter zwei übereinander angeordnete Halterungen 9 auf, wie der Fig. 3 zu entnehmen ist. Die Halterung 9 besteht aus einem Oberteil 10 und einem Unterteil 11, wo jeder der Teile 10, 11 eine Fläche 12 aufweist, 12', welche gegenseitig zugewandt sind, wobei in jeder Fläche 12, 12' eine Nut 13, 13' ausgebildet ist. Mindestens eine der gegenüberliegenden Flächen 12, 12' weist eine Riffelung 14, 14' auf. In den Nuten 13, 13' des Oberteils 10 und des Unterteils 11 der Halterung 9 ist ein Arretierungselement 15 verschiebbar angeordnet. Dieses wird gebildet durch eine Grundplatte 16, auf der zwei vertikale gegenüberliegende längere Einlaufvorsprünge 17 angeordnet sind, an deren Innenseiten Einlaufvertiefungen 18 und Kugelvertiefungen 19 ausgebildet sind. Auf der Grundplatte 16 sind ferner zwei horizontale gegenüberliegende kurze Vorsprünge 20 angeordnet, deren Innenwände Kugelvertiefungen 21 und deren Außenflächen 22 eine Riffelung 14' aufweisen.

Die Leuchteinheit 3 wird wie folgt eingebaut. Mit ihrer Hinterwand wird sie so angelegt, damit die Köpfe 5 der angeschraubten Kugelbolzen 4 an der Karosserie 1 in die Einlaufvertiefung 18 der längeren Einlaufvorsprünge 17 aufsetzen. Nach diesem partiellen Aufsetzen ist die Leuchteinheit 3 in der Längsrichtung fixiert, aber dank der verschiebbaren Lagerung der Grundplatte 16 in den Nuten 13, 13' ist die Bewegung in Querrichtung möglich. Nach passgenauer Ausrichtung der Leuchteinheit 3 gegenüber der Karosserie 1 in der Querrichtung wird durch das Eindrücken der Leuchteinheit 3 in die arretierte Stellung der Kopf 5 des Kugelbolzens 4 in die Kugelvertiefungen 21 der kürzeren Vorsprünge 20 gelangen, wodurch diese leicht gespreizt werden, infolgedessen die Riffelung 14' an Außenflächen 22 der kürzeren Vorsprünge 20 in die Riffelung 14 an den Flächen 12, 12' des Oberteils 10 und Unterteils 11 der Halterung 9 eingreift. Falls die Ausrichtung aus irgendwelchem Grund nicht zufriedenstellend ist, kann die Leuchteinheit 3 in eine Stellung hervorgezogen werden, in der sich der Kopf 5 des Kugelbolzens 4 in der Einlaufvertiefung 18 der längeren Vorsprünge 17 befindet. In dieser Stellung rücken die Flächen 12 und 22, die eine Riffelung 14, 14' aufweisen, voneinander ab und die Leuchteinheit 3 kann nachfolgend in der Querrichtung in eine neue, entsprechende Stellung ausgerichtet werden. Nach der Neuausrichtung der Köpfe 5 der Kugelbolzen 4 in die arretierte Stellung wird die Endstellung der Leuchteinheit 3 über die Befestigungsbügel 8 mit üblichen Befestigungsmitteln z.B. Schrauben in den Befestigungslöcher 6 der Formverprägung 2 der Karosserie 1 fixiert.

### Bezugszeichenliste

- 1: Karosserie
- 2: Formverprägung
- 3: Leuchteinheit
- 4: Kugelbolzen
- 5: Kopf
- 6: Befestigungsloch
- 7: Kabelstrangöffnung
- 8: Befestigungsbügel
- 9: Halterung
- 10: Oberteil
- 11: Unterteil
- 12: Fläche
- 13: Nut
- 14: Riffelung
- 15: Arretierungselement
- 16: Basis
- 17: Einlaufvorsprung
- 18: Einlaufvertiefung
- 19: Kugelvertiefung
- 20: kürzerer Vorsprung
- 21: Kugelvertiefung
- 22: Außenfläche

## Patentansprüche

1. Vorrichtung zur Befestigung einer Leuchteinheit eines Kraftfahrzeuges bestehend aus einem an einer Fahrzeugkarosserie (1) angeordneten Kugelbolzen (4) mit Kopf (5), einer an der Leuchteinheit (3) angeordneten Halterung (9), wobei die Halterung (9) aus einem Oberteil (10) und einem Unterteil (11) mit gegenüberliegend angeordneten Flächen (12, 12') mit Riffelung (14, 14') besteht, und ferner bestehend aus einem in Nuten (13, 13') angeordneten Arretierungselement (15), das zwei gegenüberliegende vertikale Einlaufvorsprünge (17) mit Einlaufvertiefungen (18) und einer Kugelvertiefung (19) und zwei horizontal angeordnete kürzere Vorsprünge (20) mit Außenflächen (22) aufweist, welche den Flächen (12, 12') des Oberteils (10) und des Unterteils (11) der Halterung (9) gegenüberliegen, **dadurch gekennzeichnet, dass** das Arretierungselement (15) aus einer Arbeitsstellung, in der die Leuchteinheit (3) in der Querrichtung gegenüber der Fahrtrichtung des Fahrzeuges ausgerichtet werden kann, in eine arretierte Stellung verstellbar ist, in der die Leuchteinheit in der Querrichtung (3) fest fixiert ist.

2. Vorrichtung zur Befestigung einer Leuchteinheit eines Kraftfahrzeuges nach Anspruch 1 **dadurch gekennzeichnet, dass** in der Arbeitsstellung der Kopf (5) des Kugelbolzens (4) zwischen den Einlaufvertiefungen (18) der Einlaufvorsprünge (17) angeordnet ist und die Flächen (12, 12') des Oberteils (10) und des Unterteils (11) und die gegenüberliegenden Außenflächen (22) der kürzeren Vorsprünge (20) nicht ineinandergreifen, wobei in der arretierten Stellung der Kopf (5) des Kugelbolzens (4) zwischen den Kugelvertiefungen (19) der Einlaufvorsprünge (17) und der kürzeren Vorsprünge (20) angeordnet ist und wenigstens eine Fläche (12, 12') des Oberteils (10) bzw. des Unterteils (11) und die entsprechende gegenüberliegende Außenfläche (22) der kürzeren Vorsprünge (20) ineinandergreifen.

3. Vorrichtung zur Befestigung einer Leuchteinheit eines Kraftfahrzeuges nach Anspruch 2 **dadurch gekennzeichnet, dass** wenigstens eine der Flächen (12, 12') des Oberteils (10) bzw. des Unterteils (11) und die jeweilige gegenüberliegende Außenfläche (22) des kürzeren Vorsprungs (20) eine Riffelung (14, 14') aufweisen.
